# EUROPEAN PATENT APPLICATION

(11) **EP 3 358 085 A1**
(43) Date of publication of application: **08.08.2018**
(21) Application number: 17154138.6
(22) Date of filing: 01.02.2017
(51) Int. Cl.: E02D 5/30, E02D 5/52, F24J 3/08, F28D 20/00

(54) **CONCRETE PILE AND METHOD OF MANUFACTURING CONCRETE PILE**

(71) Applicant: Leino, Jorma, 27250 Lappi (FI)
(72) Inventor: Leino, Jorma, 27250 Lappi (FI)
(74) Representative: Berggren Oy, Helsinki & Oulu

(57) **Abstract**

The concrete pile (1), which can be driven into the ground for supporting a building or a similar structure, comprises at least one reinforcing member (2) and at least one heat transfer pipe (4) for circulating heat transfer medium in the pile (1), the pile (1) having a first end forming a lower end of the pile (1) when the pile (1) is driven into the ground, and a second end forming an upper end of the pile (1) when the pile (1) is driven into the ground, at least the second end comprising a fluid inlet (8) for introducing heat transfer medium into a heat transfer pipe (4) and a fluid outlet (9) for discharging heat transfer medium from a heat transfer pipe (4), at least one end surface of the pile (1) being formed as a concrete surface and comprising attachment means (10) for rigidly connecting the pile (1) to a consecutive pile (1) in the pile-driving direction.

## Description

### Technical field of the invention

The present invention relates to a concrete pile in accordance with claim 1. The invention also concerns a method of manufacturing a concrete pile as defined in the other independent claim.

### Background of the invention

Deep foundations are often needed when building on a poor soil. The use of driven piles is a common way of making deep foundations. In pile-driving, prefabricated piles are driven into the ground using a pile driver. The piles can be made for example of wood, steel or reinforced concrete. The length of the piles depends on the properties of the soil and the load-bearing capacity required from the foundations. If the distance from the ground to the bedrock is short, the piles can be driven to such a depth that the lower ends of the piles rest on the bedrock. However, in some cases the friction between the piles and the surrounding soil may be sufficient for providing adequate load-bearing capacity without a need of driving the piles down to the bedrock.

In case long piles are needed, they are often composed of shorter sections, which makes the piles easier to handle and transport and allows pile-driving under bridges or other places, where the space above the ground is limited. Reliable attachment of consecutive pile sections is important for ensuring proper functioning of the piles. For allowing joining of the pile sections, the ends of concrete piles are often provided with steel boxes comprising fastening means. A steel box used as a fastening means comprises a collar encircling the perimeter of the pile and an end plate. The collar is welded to the end plate. The use of steel boxes at the ends of concrete piles has some drawbacks. They complicate the manufacturing process and also increase the costs of the piles. The steel boxes need to be accurately positioned and aligned, which requires some skill and carefulness from the workers and makes the manufacturing process slow. It also increases the risk of faulty piles. As a large number of piles is often needed for foundations, it is important to minimize the costs of the piles.

The piles used in foundations can be used for accommodating heat transfer circuits for example for utilizing geothermal energy. If a heat transfer medium is circulated in the piles, it is even more important that the pile sections are rigidly and reliably attached to each other.

### Summary of the invention

An object of the present invention is to provide an improved concrete pile, which can be driven into the ground for supporting a building or a similar structure. The characterizing features of the pile according to the invention are given in claim 1. Another object of the invention is to provide an improved method of manufacturing a concrete pile. The characterizing features of the method are given in the other independent claim.

A concrete pile according to the invention comprises at least one reinforcing member and at least one heat transfer pipe for circulating heat transfer medium in the pile, the pile having a first end forming a lower end of the pile when the pile is driven into the ground, and a second end forming an upper end of the pile when the pile is driven into the ground, at least the second end comprising a fluid inlet for introducing heat transfer medium into a heat transfer pipe and a fluid outlet for discharging heat transfer medium from a heat transfer pipe, at least one end surface of the pile being formed as a concrete surface and comprising attachment means for rigidly connecting the pile to a consecutive pile in the pile-driving direction.

With the pile according to the invention, the piles used in deep foundations can be used also for utilizing geothermal energy or for storing thermal energy into the soil. The piles can be firmly attached to each other for ensuring leak-proof connections and torsional stiffness. Since the attachment surface is formed as a concrete surface, the manufacturing costs are reduced.

The method according to the invention comprises the steps of providing a mold, arranging at least one reinforcing member and at least one heat transfer pipe inside the mold, providing a jig to which attachment means for rigidly connecting the pile to a consecutive pile are attached, arranging the jig at one end of the mold so that a fluid inlet and a fluid outlet for heat transfer medium are formed, pouring concrete into the mold, removing the pile from the mold, and removing the jig from the pile.

According to an embodiment of the invention, the attachment means are arranged on the end surface in at least two locations, which are at a distance from each other in the plane of the end surface. This improves the stiffness of the joint.

According to an embodiment of the invention, the attachment means comprise at least one loop, which protrudes outwards from the end surface.

According to an embodiment of the invention, the fluid inlet and/or the fluid outlet protrude outwards from the end surface. The fluid inlet or fluid outlet protruding outwards from the end surface can comprise a connecting piece that is provided with an outer section and an inner section in the longitudinal direction of the pile, the inner section having a larger diameter than the outer section, the outer section being arranged completely outside the concrete part of the pile, and the inner section protruding only partly outside the concrete part. According to an embodiment of the invention, the inner section protrudes 0.5 to 5 mm outside the concrete part. The inlets/outlets protruding outwards from the end surface can be compressed by the consecutive pile, which seals the joint between the heat transfer pipes.

According to an embodiment of the invention, the concrete part around the fluid inlet and/or fluid outlet is configured to allow expansion of the inner section of the connecting piece. For instance the concrete part can be provided with a conical cavity for the connecting piece. This allows controlled deformation of the inlet or outlet.

According to an embodiment of the invention, at least one end of the pile is provided with a collar that is made of a sheet material and surrounds the perimeter of the pile. The collar protects the end of the pile during transportation and handling.

According to an embodiment of the invention, both the first end surface and the second end surface are formed as concrete surfaces and comprise means for rigidly connecting the pile to consecutive piles in the pile-driving direction.

The jig used for manufacturing the pile can be made of a plastic material. The jig can be made by additive manufacturing.

According to an embodiment of the invention, a connecting piece for forming a fluid inlet or a fluid outlet is attached to the jig.

### Brief description of the drawings

Embodiments of the invention are described below in more detail with reference to the accompanying drawings, in which
Fig. 1 shows a concrete pile according to an embodiment of the invention,
Fig. 2 shows a concrete pile according to another embodiment of the invention,
Fig. 3 shows an exploded cut view of the concrete pile of Fig. 1,
Fig. 4 shows a cut view of an end of a pile, and
Fig. 5 shows a jig for manufacturing a pile.

### Description of embodiments of the invention

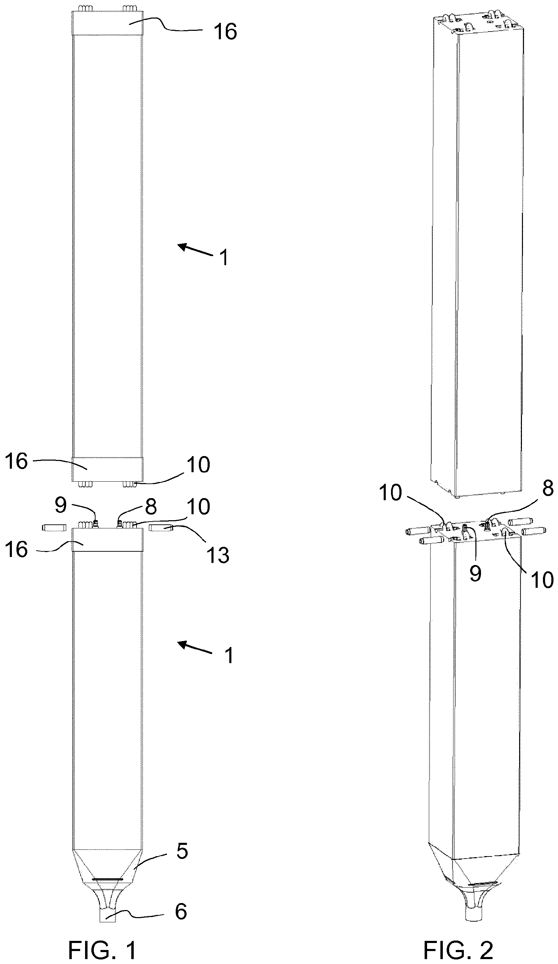

In figure 1 is shown a concrete pile 1 according to an embodiment of the invention. The concrete pile 1 can be used in deep foundations for supporting a building or a similar structure. In addition to foundations of buildings, the pile 1 could be used for example under a road. The pile 1 is driven into the ground to such a depth that the lower end of the pile 1 meets the bedrock or that the friction between the soil and the pile 1 is sufficient for carrying the required load. Many different kinds of pile drivers can be used for driving the piles 1 according to the invention into the ground. Generally speaking, in pile-driving an impact is applied on an end surface of the pile. Pile drivers can utilize, for instance, a heavy weight, pressurized air or hydraulic pressure for exerting a force on the pile 1. Different pile drivers and pile-driving methods are known and will not be described here in more detail.

The required length of the piles 1 varies depending on the properties of the soil in different places of use. Also at a certain construction site, piles 1 with different lengths are often needed. Manufacturing of a large number of different lengths is not practical. Long piles are also difficult to transport and handle. In addition, at certain construction sites, for instance below bridges or other structures, the space above the pile-driving location may be limited. Therefore, the piles 1 are preferably provided in a predetermined length, and in case longer piles are needed, two or more piles are connected to each other to form a pile with an appropriate length. Figure 1 shows two piles 1. The lower pile 1 of figure 1 can be used as a lowermost pile in foundations. The upper pile 1 of figure 1 can be attached to the lower pile 1 to form a longer pile assembly.

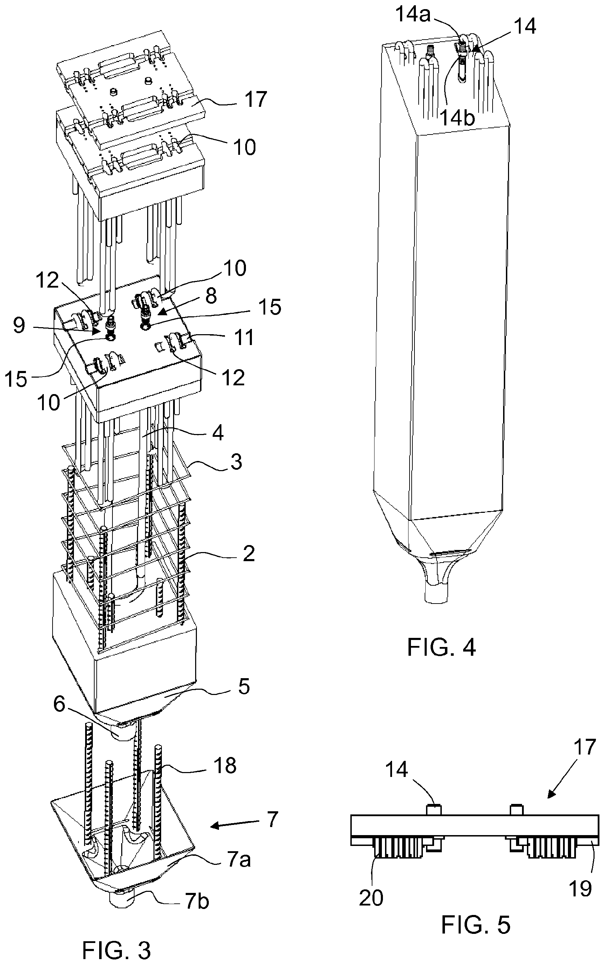

An exploded cut view of the lowermost pile 1 of figure 1 is shown in figure 3. The body part of the pile 1 is made of concrete and provided with at least one reinforcing member 2. In the embodiment of figures 1 and 3, eight reinforcing members 2 in the form of reinforcing bars 2 are provided. The reinforcing bars 2 extend through the concrete part in the longitudinal direction of the pile 1 and can be made of steel. A binding wire 3 is used for binding the reinforcing bars 2 together. The reinforcing members 2 do not need to be straight, but also other kinds of reinforcing members 2 can be provided.

In the longitudinal direction of the pile 1, the pile 1 has a first end and a second end. When the pile 1 is driven into the ground, the first end forms the lower end of the pile 1. The second end forms the upper end of the pile 1. The lower pile 1 of figure 1 is configured to be used as the first, i.e. the lowermost pile that is driven into the ground. The first end of the pile 1 is tapered for facilitating driving of the pile 1. In the embodiment of figure 1, the tapered end comprises a pyramidal section 5 and a cylindrical section 6, which forms the tip of the pile 1. The concrete part of the pile 1 is protected with a cover part 7. The internal shape of the cover part 7 corresponds to the external shape of the concrete part of the pile 1. The cover part 7 is arranged at the first end of the pile 1. Also the cover part 7 comprises a pyramidal section 7a and a cylindrical section 7b. The cover part 7 can be made of steel. At least the cylindrical section 7b is preferably made of hardened steel. The cover part 7 is provided with gripping bars 18, which attach the cover part 7 to the concrete part.

The pile 1 is further provided with at least one heat transfer pipe 4. Heat transfer medium can be circulated in the heat transfer pipe 4. The pile 1 can thus be used for transferring heat from the ground to the heat transfer medium or from the heat transfer medium to the ground. The pile 1 can thus be used, for instance, as a part of a heating system that utilizes geothermal energy. The pile 1 could also be used for storing thermal energy into the ground. By providing the pile 1 with a heat transfer pipe 4, the need of drilling wells or making excavations for heat transfer circuits can be reduced or eliminated. The heat transfer pipe 4 can be, for instance, a plastic pipe. In the embodiment of figure 3, the pile 1 is used as the lowermost pile in the pile-driving direction. Therefore, the heat transfer pipe 4 of the pile 1 forms a loop that is closed at the first end of the pile 1 and open at the second end of the pile 1. The heat transfer medium is introduced into the heat transfer pipe 4 from the second end of the pile 1 and also discharged from the pile 1 from the second end of the pile 1. The heat transfer pipe 4 of figure 3 is U-shaped, but the pipe 4 could also be, for instance, spiral-shaped. With a spiral-shaped heat transfer pipe 4, the pile 1 could accommodate a longer heat transfer pipe 4. It is also possible to provide the pile 1 with two or more heat transfer pipes 4.

The second end of the pile 1 is provided with an inlet 8 for introducing heat transfer medium into the heat transfer pipe 4 and with an outlet 9 for discharging heat transfer medium from the heat transfer pipe 4. Since the pile 1 of figure 3 is used as the first pile that is driven into the ground, the first end of the pile 1 does not comprise an inlet or an outlet for the heat transfer medium. Instead, the heat transfer pipe 4 forms a loop that is closed at the first end of the pile 1. If the pile 1 was not the lowermost pile 1, the pile 1 could be provided with a first heat transfer pipe for conveying heat transfer medium from the second end of the pile 1 to the first end of the pile 1, and with a second heat transfer pipe for conveying the heat transfer medium from the first end of the pile 1 to the second end of the pile 1. At the second end of the pile 1, the first heat transfer pipe would thus be provided with an inlet and the second heat transfer pipe with an outlet. At the first end of the pile 1, the first heat transfer pipe would be provided with an outlet and the second heat transfer pipe with an inlet. The heat transfer medium could thus be conveyed via the first heat transfer pipes to the lowermost pile 1 and via the second heat transfer pipes back to the ground level.

At least the second end of the pile 1 is formed as a concrete surface. The second end is thus not provided with a steel plate or a similar structure for facilitating attachment of the pile 1 to the first end of the succeeding pile 1. The second end of the pile 1 is provided with attachment means 10 for rigidly attaching the pile 1 to the consecutive pile 1. The expression "rigidly" means here that the joint between the piles 1 resists torsion of the upper pile 1 in respect of an axis that is parallel with the end surfaces of the piles. Also rotation of the pile 1 about the longitudinal axis of the pile 1 is prevented. The rigid connection also resists tension in the longitudinal direction of the piles 1. In the embodiment of figures 1 and 3, the second end of the pile 1 is provided with four attachment areas. The attachment areas are arranged close to the corners of the pile 1. The joint between the piles 1 can thus effectively resist torsion. In the embodiment of figures 1 and 3, each attachment area is provided with two loops 10. The loops 10 are U-shaped bars. The branches of the loops 10 protrude into the pile 1 and are attached to the reinforcing bars 2. The loops 10 protrude outwards from the second end of the pile 1. At each attachment area, the loops 10 are arranged at a distance from each other. A semicircular groove 11 extends from a side surface of the pile 1 through the loops 10 of each attachment area. A semicircular slot 12 is arranged next to each loop 10. The first end of the consecutive pile 1 is provided with a similar arrangement. However, the loops 10 and the slots 11 are shifted in the direction of the grooves 11 in such a way that when the first end of the upper pile 1 is arranged against the second end of the lower pile, the loops 10 of each pile 1 protrude into the slots 12 of the adjacent pile 1. Figure 1 shows locking pins 13. After arranging the piles 1 against each other, locking pins 13 are arranged into the grooves 11 and through the loops 10 for securing the joint. Instead of the U-shaped loops 10, some other kinds of attachment means could be used. For instance, an end surface of a pile 1 could be provided with bars protruding outwards from the end surface, and the mating surface of the consecutive pile 1 could be provided with apertures for accommodating the bars.

Figure 4 shows a cut view of an end of a pile 1. In the embodiment of figure 4, both the inlet 8 and the outlet 9 of the heat transfer pipe 4 are provided with male-type connecting pieces 14. Each connecting piece 14 comprises an outer section 14a and an inner section 14b in the longitudinal direction of the pile 1. The outer section 14a protrudes completely out of the end of the pile 1. The inner section 14b is partly inside the concrete part of the pile 1 and protrudes partly outwards from the second end of the pile 1. The outer section 14a has a smaller diameter than the inner section 14b. The outer section 14a is configured to be inserted into a female-type connection of the adjacent pile 1. The female-type connection of the adjacent pile 1 can be a separate connecting piece, or the male-type connecting piece 14 can be inserted directly into the heat transfer pipe 4 of the adjacent pile 1. Around each connecting piece 14, the pile 1 is configured to allow expansion of the inner section 14b of the connecting piece 14. The connecting piece 14 can be arranged in a cavity, which has at least partly greater diameter than the inner section 14b of the connecting piece 14. The cavity 15, which can be seen in figure 3, can have a conical shape. When an adjacent pile 1 is arranged against a pile 1 with a male-type connecting piece 14, the end of the pile 1 pushes the inner section 14b of the connecting piece 14 in the longitudinal direction of the pile 1. The inner section 14b is thus compressed. The cavity 15 allows expansion of the inner section 14b in the radial direction. The compressed connecting piece 14 functions as a sealing member and a leak-proof joint is formed between the heat transfer pipes 4 of successive piles 1.

In the embodiment of figure 1, each end of the upper pile 1 is provided with a collar 16. Also the second end of the lower pile 1 is provided with a collar 16. The collars 16 are made of a sheet material, such as steel. The purpose of the collars 16 is to protect the ends of the piles 1 during handling and transportation of the piles 1. The collars 16 are not necessary, but the pile 1 can be made also without the collars, as shown in figure 2. In both embodiments, at least one end of the pile 1 is formed as a concrete surface.

The piles 1 are manufactured by casting. A mold for casting the piles 1 is provided. The mold is an elongated trough having a shape corresponding to the desired shape of the piles 1. The mold has a bottom wall and side walls. The mold can also have one or two end walls. At least part of the top of the mold is open for allowing concrete to be poured into the mold. Before pouring the concrete into the mold, the reinforcing bars 2 and the heat transfer pipes 4 are arranged within the mold and secured to the appropriate locations. For allowing forming of the attachment means 10 and the inlets 8 and outlets 9 of the heat transfer pipes 4, a jig 17 is provided. Figures 3 and 5 show a jig 17 that can be used in the manufacturing method. The jig 17 is a plate to which the attachment means 10 can be attached. The jig 17 functions as an end wall of the mold and forms an end surface of the pile 1. At least one end of the mold is provided with a jig 17. If the pile 1 is used as the lowermost pile, a jig 17 is not needed for the first end of the pile 1. Instead of a jig 17, a cover part 7 is arranged inside the mold for forming the first end of the pile 1.

The jig 17 can be made of, for instance, a plastic material. Additive manufacturing can be used for making the jig 17. The jig 17 is provided with protrusions 19, 20 for forming the grooves 11 and slots 12 at the ends of the piles 1. In case the inlets 8 and the outlets 9 are provided with connecting pieces 14, the connecting pieces 14 are attached to the jig 17. Instead of the connecting pieces 14, the jig 17 can be provided with protrusions, which are inserted into the heat transfer pipes 4 before casting. The jig 17 that has been provided with the attachment means 10 and possibly with the connecting pieces 14 is arranged inside the mold. Concrete is then poured into the mold. When the casted pile 1 has achieved a sufficient strength, the pile 1 is removed from the mold and the jig 17 is removed from the end of the pile 1.

It will be appreciated by a person skilled in the art that the invention is not limited to the embodiments described above, but may vary within the scope of the appended claims.

## Claims

1. A concrete pile (1), which can be driven into the ground for supporting a building or a similar structure, the pile (1) comprising at least one reinforcing member (2) and at least one heat transfer pipe (4) for circulating heat transfer medium in the pile (1), the pile (1) having a first end forming a lower end of the pile (1) when the pile (1) is driven into the ground, and a second end forming an upper end of the pile (1) when the pile (1) is driven into the ground, at least the second end comprising a fluid inlet (8) for introducing heat transfer medium into a heat transfer pipe (4) and a fluid outlet (9) for discharging heat transfer medium from a heat transfer pipe (4), at least one end surface of the pile (1) being formed as a concrete surface and comprising attachment means (10) for rigidly connecting the pile (1) to a consecutive pile (1) in the pile-driving direction.

2. A concrete pile (1) according to claim 1, wherein the attachment means (10) are arranged on the end surface in at least two locations, which are at a distance from each other in the plane of the end surface.

3. A concrete pile (1) according to claim 1 or 2, wherein the attachment means (10) comprise at least one loop, which protrudes outwards from the end surface.

4. A concrete pile (1) according to any of claims 1 to 3, wherein the fluid inlet (8) and/or the fluid outlet (9) protrude outwards from the end surface.

5. A concrete pile (1) according to claim 4, wherein a fluid inlet (8) or fluid outlet (9) protruding outwards from the end surface comprises a connecting piece (14) that is provided with an outer section (14a) and an inner section (14b) in the longitudinal direction of the pile (1), the inner section (14b) having a larger diameter than the outer section (14a), the outer section (14a) being arranged completely outside the concrete part of the pile (1), and the inner section (14b) protruding only partly outside the concrete part.

6. A concrete pile (1) according to claim 5, wherein the inner section (14b) protrudes 0.5 to 5 mm outside the concrete part.

7. A concrete pile (1) according to claim 5 or 6, wherein the concrete part around the fluid inlet (8) and/or fluid outlet (9) is configured to allow expansion of the inner section (14b) of the connecting piece (14).

8. A concrete pile (1) according to any of claims 5 to 7, wherein the concrete part is provided with a conical cavity (15) for the connecting piece (14).

9. A concrete pile (1) according to any of the preceding claims, wherein at least one end of the pile (1) is provided with a collar (16) that is made of a sheet material and surrounds the perimeter of the pile (1).

10. A concrete pile (1) according to any of the preceding claims, wherein both the first end surface and the second end surface are formed as concrete surfaces and comprise means (10) for rigidly connecting the pile (1) to consecutive piles (1) in the pile-driving direction.

11. A method of manufacturing a reinforced concrete pile (1) according to any of the preceding claims, the method comprising the steps of
- providing a mold,
- arranging at least one reinforcing member (2) and at least one heat transfer pipe (4) inside the mold,
- providing a jig (17) to which attachment means (10) for rigidly connecting the pile (1) to a consecutive pile (1) are attached,
- arranging the jig (17) at one end of the mold so that a fluid inlet (8) and a fluid outlet (9) for heat transfer medium are formed,
- pouring concrete into the mold,
- removing the pile (1) from the mold, and
- removing the jig (17) from the pile (1).

12. A method according to claim 11, wherein the jig (17) is made of a plastic material.

13. A method according to claim 11 or 12, wherein the jig (17) is made by additive manufacturing.

14. A method according to any of claims 11 to 13, wherein a connecting piece (14) for forming a fluid inlet (8) or a fluid outlet (9) is attached to the jig (17).
